# EUROPEAN PATENT APPLICATION

(11) **EP 3 219 449 A2**
(43) Date of publication of application: **20.09.2017**
(21) Application number: 17161288.0
(22) Date of filing: 16.03.2017
(51) Int. Cl.: B25J 13/08, B25J 19/02

(54) **ROBOT AND TORQUE SENSOR**

(30) Priority: 18.03.2016 JP 2016055697
(71) Applicant: Kabushiki Kaisha Yaskawa Denki, Kitakyushu-shi, Fukuoka 806-0004 (JP)
(72) Inventor: UEMURA, Koji, Kitakyushu-shi Fukuoka 806-0004 (JP); ZHAO, Fei, Kitakyushu-shi Fukuoka 806-0004 (JP); SOGA, Takehito, Kitakyushu-shi Fukuoka 806-0004 (JP)
(74) Representative: Grünecker Patent- und Rechtsanwälte PartG mbB

(57) **Abstract**

A robot (100) includes a rotation axis (X1-X6) and a torque sensor (1). The torque sensor (1) is disposed on the rotation axis, and includes a strain generating body (2) and a strain sensor (10A, 10B). The strain sensor is mounted on a portion of the strain generating body (2). The strain generating body (2) includes an inner flange (21), a ring-shaped outer flange (22), and a plurality of spokes (23A-23F). The outer flange (22) is disposed further outward than the inner flange (21) in a radial direction of the inner flange. The plurality of spokes (23A-23F) are disposed between the inner flange and the outer flange and connect the inner flange and the outer flange to each other. At least one spoke of the plurality of spokes (23A-23F) is a separate spoke (23A, 23B) which is un-integral to the inner flange and the outer flange and on which the strain sensor (10A, 10B) is mounted.

## Description

### BACKGROUND

### FIELD OF THE INVENTION

The present invention relates to a robot and a torque sensor.

### DISCUSSION OF THE BACKGROUND

Japanese Unexamined Patent Application Publication No. 2004-029023A1 discloses a torque sensor with a strain sensor mounted on a spoke that serves as a strain generating body.

The contents of Japanese Unexamined Patent Application Publication No. 2004-029023A1 are incorporated herein by reference in their entirety.

With the torque sensor disclosed in Japanese Unexamined Patent Application Publication No. 2004-029023A1, there are costs involved in securing precision (repeatability) of the spoke and mounting the strain sensor. There is a need for a torque sensor that is mountable in robots without excessive rise in cost of robots and without adversely affecting the quality of robots.

It is an object of the present disclosure to provide a robot with a torque sensor mounted on the robot without excessive rise in cost of the robot and without adversely affecting the quality of the robot. It is also an object of the present disclosure to provide such torque sensor.

### SUMMARY

According to one aspect of the present disclosure, a robot includes a rotation axis and a torque sensor. The torque sensor is disposed on the rotation axis, and includes a strain generating body and a strain sensor. The strain sensor is mounted on a portion of the strain generating body. The strain generating body includes an inner flange, a ring-shaped outer flange, and a plurality of spokes. The outer flange is disposed further outward than the inner flange in a radial direction of the inner flange. The plurality of spokes are disposed between the inner flange and the outer flange and connect the inner flange and the outer flange to each other. At least one spoke of the plurality of spokes is a separate spoke which is un-integral to the inner flange and the outer flange and on which the strain sensor is mounted.

According to another aspect of the present disclosure, a torque sensor includes a strain generating body and a strain sensor. The strain sensor is mounted on a portion of the strain generating body. The strain generating body includes an inner flange, a ring-shaped outer flange, and a plurality of spokes. The outer flange is disposed further outward than the inner flange in a radial direction of the inner flange. The plurality of spokes are disposed between the inner flange and the outer flange and connect the inner flange and the outer flange to each other. At least one spoke of the plurality of spokes is a separate spoke which is un-integral to the inner flange and the outer flange and on which the strain sensor is mounted.

The embodiments provide a robot with a torque sensor mounted on the robot without excessive rise in cost of the robot and without adversely affecting the quality of the robot. The embodiments also provide such torque sensor.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 illustrates a robot according to an embodiment;
FIG. 2 is a plan view of a torque sensor according to the embodiment;
FIG. 3 is a perspective view of the torque sensor according to the embodiment;
FIG. 4 is a plan view of the torque sensor with separate spokes removed;
FIG. 5 is a perspective view of the torque sensor with the separate spokes removed;
FIG. 6 is a plan view of a separate spoke;
FIG. 7 is a perspective view of the separate spoke; and
FIGs. 8A to 8C illustrate exemplary strain sensors mounted on the separate spoke.

### DESCRIPTION OF THE EMBODIMENTS

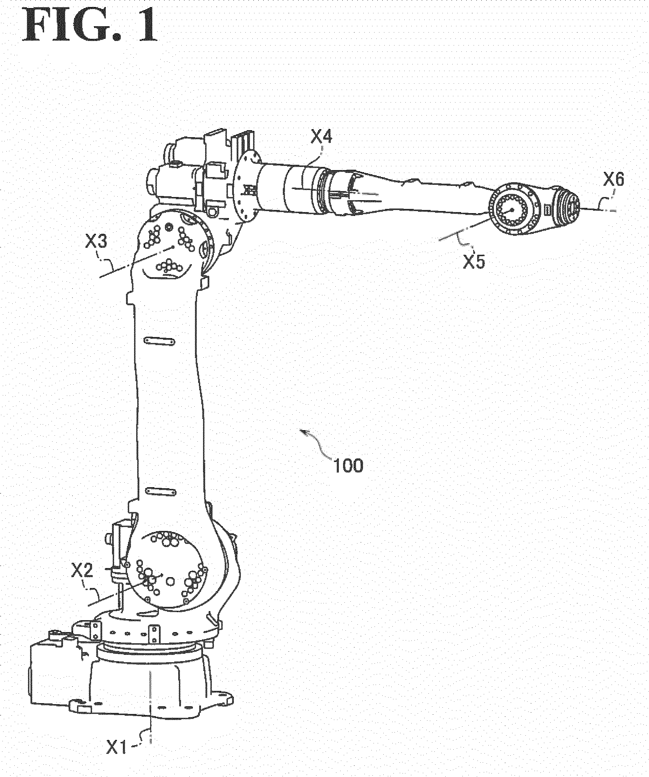

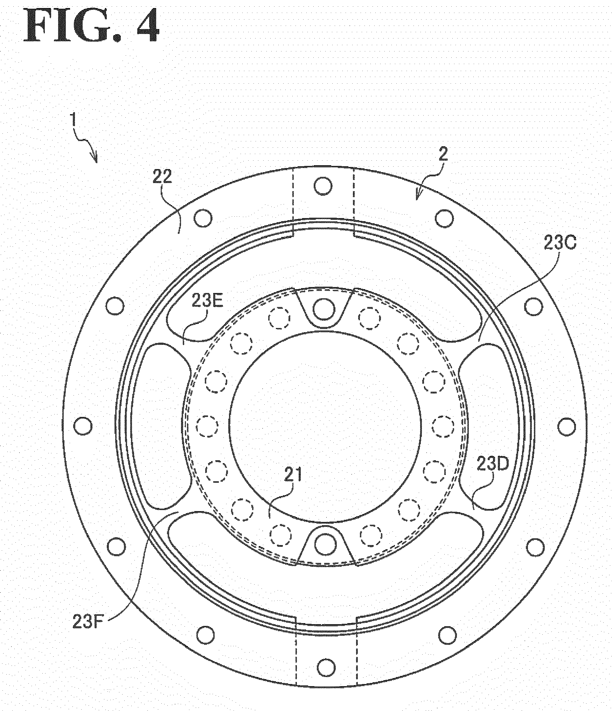

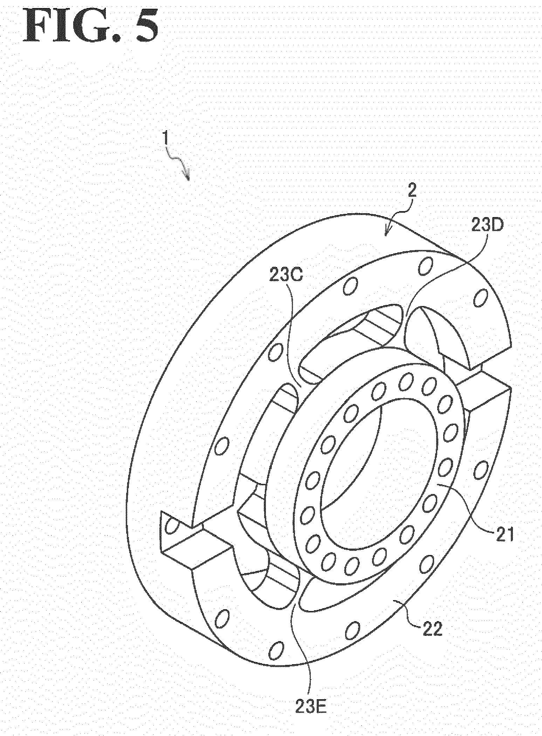

An embodiment will be described below by referring to FIGs. 1, 2, 3, 4, 5, 6, 7, 8A, 8B, and 8C. As illustrated in FIG. 1, a robot 100 according to this embodiment is a six-axis robot, which includes rotation axes X1 to X6. This configuration, however, is not intended as limiting the number of axes of the robot 100. Other examples of the robot 100 include, but are not limited to, a multi-axis robot with seven or more rotation axes, a multi-axis robot with two to five rotation axes, and a single-axis robot. Also in the embodiment illustrated in FIG. 1, the robot 100 is a single-arm robot. In another possible embodiment, the robot 100 may be a multi-arm robot with two or more arms.

The robot 100 according to this embodiment includes a torque sensor 1. The torque sensor 1 is disposed in at least one of the rotation axes X1 to X6.

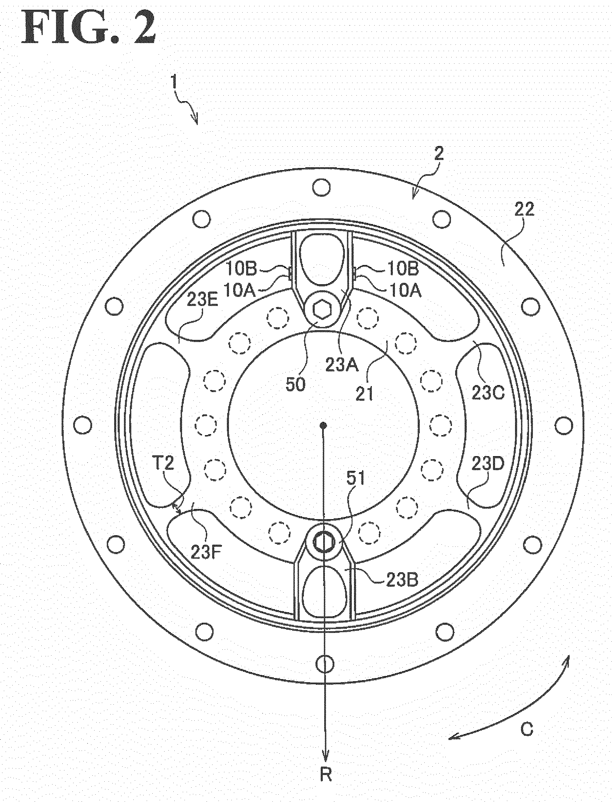

As illustrated in FIGs. 2 to 5, the torque sensor 1 includes a strain generating body 2 and strain sensors (strain gauges) 10A and 10B. The strain sensors 10A and 10B are mounted on a portion of the strain generating body 2.

The strain generating body 2 generates strain in response to external force, and includes an inner flange 21, an outer flange 22, and a plurality of spokes 23A to 23F.

The inner flange 21 has a cylindrical shape, as illustrated in FIGs. 2 to 5. The inner flange 21 may have any other shape.

The outer flange 22 has a ring shape disposed further outward than the inner flange 21 in the radial direction, R, of the inner flange 21. While in this embodiment the outer flange 22 has a ring shape, the outer flange 22 may have any other shape.

The plurality of spokes 23A to 23F are disposed between the inner flange 21 and the outer flange 22, and connect the inner flange 21 and the outer flange 22 to each other.

At least one spoke of the plurality of spokes 23A to 23F is a separate spoke which is un-integral to the inner flange 21 and the outer flange 22 and on which the strain sensors 10A and 10B are mounted. In this embodiment, the spokes 23A and 23B are separate spokes, as illustrated in FIGs. 2 to 7. In another possible embodiment, one of the spokes 23A and 23B may be a separate spoke.

Thus, the spokes (separate spokes) 23A and 23B, on which the strain sensors 10A and 10B are mounted, are un-integral to the inner flange 21 and the outer flange 22. This configuration facilitates the work of mounting the strain sensors 10A and 10B onto the spokes 23A and 23B.

In another possible embodiment, all the plurality of spokes 23A to 23F may be un-integral to the inner flange 21 and the outer flange 22. In still another possible embodiment, the spokes 23A and 23B, which are separate spokes in this embodiment, may be designed to bear the load borne by the other spokes 23C to 23F. This design eliminates the need for the other spokes 23C to 23F.

As illustrated in FIG. 2 to 5, the plurality of spokes 23A to 23F form a radial pattern between the inner flange 21 and the outer flange 22. This configuration improves productivity and enables cost reduction. The plurality of spokes 23A to 23F may form any other pattern between the inner flange 21 and the outer flange 22.

As illustrated in FIGs. 2 to 5, the spokes 23A and 23B are separate spokes, and the rest of the spokes 23A to 23F, namely, the plurality of spokes 23C to 23F are integral spokes which are integral to the inner flange 21 and the outer flange 22 and on which the strain sensors 10A and 10B are mounted.

Thus, the spokes (integral spokes) 23C to 23F, on which no strain sensors 10A and 10B are mounted, are integral to the inner flange 21 and the outer flange 22. This configuration minimizes the number of the separate spokes, reducing the count of the process steps of forming the strain generating body 2.

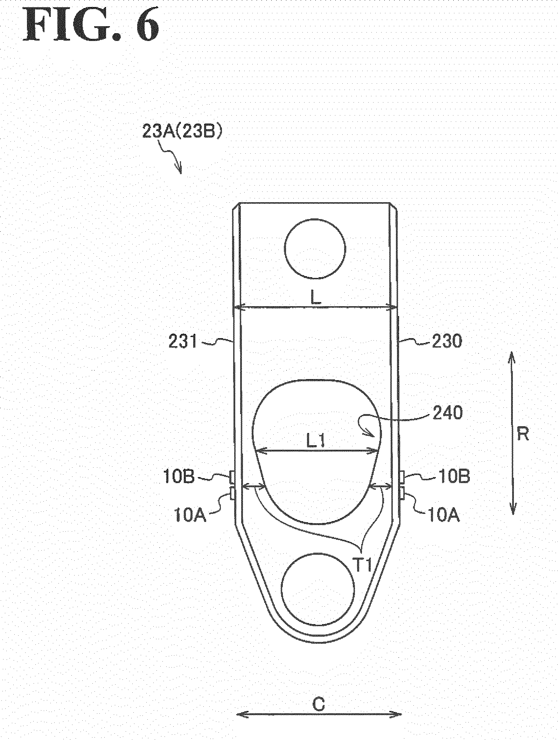

As illustrated in FIG. 6, the strain sensors 10A and 10B are mounted on two surfaces 230 and 231 of each of the spokes 23A and 23B, which are separate spokes in this embodiment.

The two surfaces 230 and 231 are approximately parallel to each other. As used herein, "the two surfaces 230 and 231 are approximately parallel to each other" refers to a level of parallelism between the two surfaces 230 and 231 that is sufficient to secure the advantageous effects of this embodiment.

Also as illustrated in FIG. 6, the outer dimension, L, of each separate spoke (the spokes 23A and 23B) in the circumferential direction, C, of the outer flange 22 is longest between the two surfaces 230 and 231.

This configuration uniformizes strain on the separate spoke (the spokes 23A and 23B).

Specifically, the two surfaces 230 and 231 are most outward portions of the separate spoke (the spokes 23A and 23B) in the circumferential direction C. This configuration improves accuracy in grinding and other work involved in such processes as measuring and/or securing the flatness of the two surfaces 230 and 231 and the level of parallelism of the two surfaces 230 and 231, and thickening the two surfaces 230 and 231. By improving these kinds of accuracy, strain on the separate spoke (the spokes 23A and 23B) is uniformized.

Additionally, since no other portions of the separate spoke (the spokes 23A and 23B) are more outward in the circumferential direction C than the two surfaces 230 and 231, the grinding work is facilitated, resulting in reduction of the production cost.

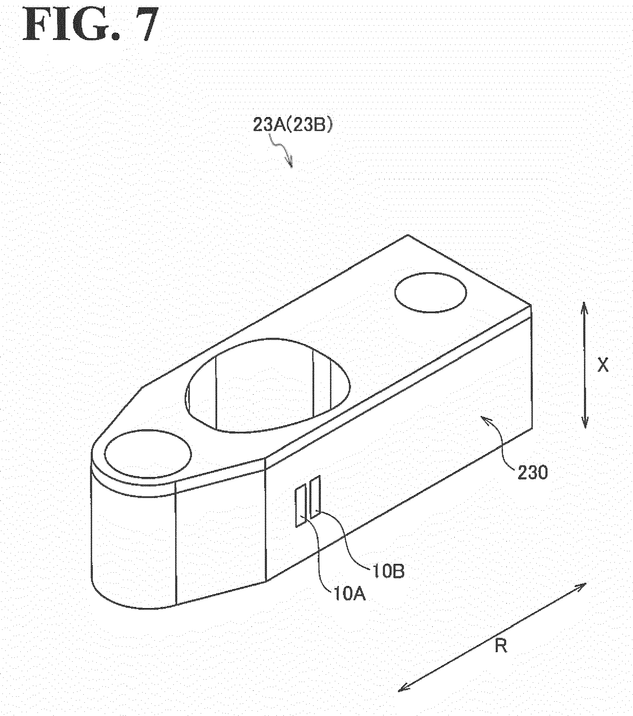

As illustrated in FIGs. 6 and 7, two strain sensors 10A and 10B (corresponding to the two first strain sensors recited in the appended claims) are mounted on the surface 230 (corresponding to the first surface recited in the appended claims) of each separate spoke (the spokes 23A and 23B), and another two strain sensors 10A and 10B (corresponding to the two second strain sensors recited in the appended claims) are mounted on the surface 231 (corresponding to the second surface recited in the appended claims) of the separate spoke (the spokes 23A and 23B). Thus, two strain sensors 10A and 10B are mounted on the two surfaces 230 and 231 of each separate spoke (the spokes 23A and 23B). This configuration improves the strain sensors' reliability of detection of strain.

The number of the strain sensors mounted on the two surfaces 230 and 231 of the separate spoke (the spokes 23A and 23B) will not be limited to two; any other number of strain sensors may be mounted on the two surfaces 230 and 231.

In another possible embodiment, one strain sensor or a plurality of strain sensors may be mounted on either the surface 230 or the surface 231 of the separate spoke (the spokes 23A and 23B). In this case, any number of strain sensors may be mounted on the surface 230 or the surface 231.

In still another possible embodiment, on at least one of the spokes 23A and 23B, the number of the strain sensors mounted on the surface 230 may be the same as or different from the number of the strain sensors mounted on the surface 231.

In still another possible embodiment, the number of the strain sensors mounted on the surfaces 230 and 231 of the spoke 23A may be the same as or different from the number of the strain sensors mounted on the surfaces 230 and 231 of the spoke 23B.

A hole 240 is defined between the two surfaces 230 and 231 of the separate spoke (the spokes 23A and 23B).

Thus, the strain sensors 10A and 10B are mounted on the surfaces 230 and 231. This configuration facilitates the work of mounting the strain sensors 10A and 10B onto the separate spoke (the spokes 23A and 23B). Additionally, the hole 240, which is defined between the two surfaces 230 and 231, uniformizes lateral strain.

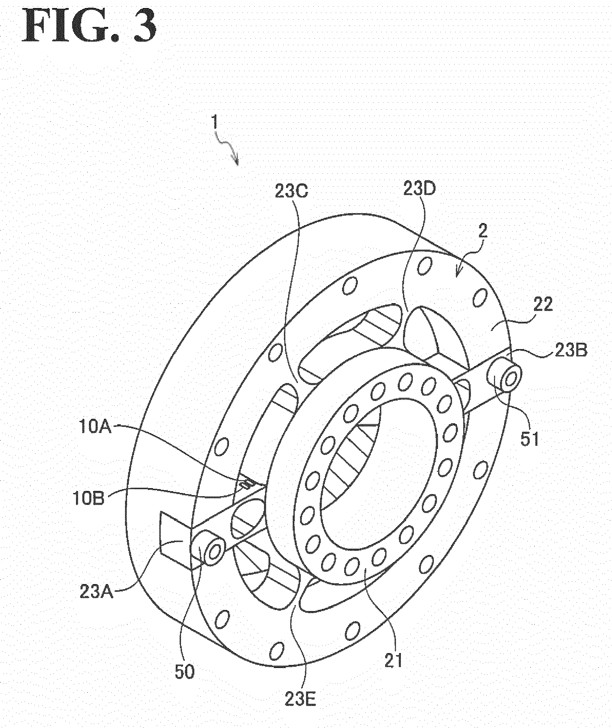

The presence of the hole 240 also enlarges the two surfaces 230 and 231 of the separate spoke (the spokes 23A and 23B) in outer dimensions. This facilitates the means of connection between the separate spoke (the spokes 23A and 23B) and the inner flange 21 and between the separate spoke (the spokes 23A and 23B) and the outer flange 22. For example, as illustrated in FIGs. 2 and 3, means as simple as bolts 50 and 51 are used to connect the separate spoke (the spokes 23A and 23B) to the inner flange 21 and the outer flange 22.

The separate spoke (the spokes 23A and 23B) has thickness *T1*. The thickness *T1* is defined in the circumferential direction C between the hole 240 and the strain sensors 10A and 10B on each of the two surfaces 230 and 231, and is approximately identical to the thickness, *T2*, of the integral spoke (the other spokes 23C to 23F) in the circumferential direction C.

As illustrated in FIGs. 2 and 6, the thickness *T1* may not necessarily be uniform throughout the portion defined in the circumferential direction C between the hole 240 and the strain sensors 10A and 10B on each of the two surfaces 230 and 231. In this case, the thickness *T1* may be defined as an average value, a maximum value, or a minimal value of the thicknesses of the portion in the circumferential direction C. Similarly, the thickness *T2* may not necessarily be uniform throughout the integral spoke (the other spokes 23C to 23F) in the circumferential direction C. In this case, the thickness *T2* may be defined as an average value, a maximum value, or a minimal value of the thicknesses of the integral spoke (the other spokes 23C to 23F) in the circumferential direction C.

This configuration uniformizes the strain on the separate spoke (the spokes 23A and 23B) and the strain on the integral spoke (the other spokes 23C to 23F).

The above configuration also ensures that once the strain sensors 10A and 10B have detected strain on each of the spokes 23A to 23F, the detected strain is common to each of the spokes 23A to 23F. This, in turn, facilitates the adjustment of a profile of strain caused by external force.

The hole 240 has a hole dimension of *L1* in the circumferential direction C. The hole dimension *L1* has a first dimension, a second dimension, and a third dimension. The first dimension is closer to the inner flange 21 than the strain sensors 10A and 10B are to the inner flange 21. The second dimension is closer to the outer flange 22 than the strain sensors 10A and 10B are to the outer flange 22, and is greater than the first dimension. The third dimension is closer to the outer flange 22 than the second dimension is to the outer flange 22, and is less than the second dimension.

This configuration enlarges the region over which strain is uniformized. This, in turn, facilitates the mounting of the strain sensors 10A and 10B. The above configuration also enables the separate spoke and the integral spoke identical to each other in dimensions, that is, a common design can be used for the separate spoke and the integral spoke.

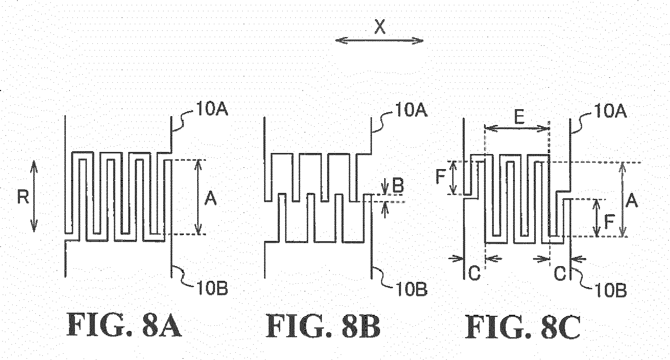

As illustrated in FIGs. 8A to 8C, the two strain sensors 10A and 10B overlap each other at least partially in the direction (radial direction, R) in which the two strain sensors 10A and 10B detect strain. Specifically, the two strain sensors 10A and 10B overlap each other in the thickness direction, *X*, of the separate spoke (the spokes 23A and 23B). The thickness direction *X* is orthogonal to the direction R.

More specifically, as illustrated in FIGs. 8A to 8C, each of the strain sensors 10A and 10B includes a plurality of wires extending in the radial direction R, in which the two strain sensors 10A and 10B detect strain. The wires of the strain sensor 10A and the wires of the strain sensor 10B alternate in the thickness direction *X*. This arrangement makes the wires of the strain sensors 10A and 10B overlap each other at least partially in the direction R, in which the two strain sensors 10A and 10B detect strain.

This configuration makes the strain approximately uniform throughout the two strain sensors 10A and 10B, facilitating the multiplexing of the strains detected by the two strain sensors 10A and 10B. As a result, the reliability of the detection of strain by the strain sensors 10A and 10B improves.

The above configuration also improves the accuracy of measuring the amount by which the side surfaces of the spokes 23A and 23B expand or contract in the radial direction R. This, in turn, improves the accuracy of measuring torque in the circumferential direction C.

In the embodiment of FIG. 8A, the wires of the strain sensor 10A overlap the wires of the strain sensor 10B in the direction R over substantial region A.

In the embodiment of FIG 8B, the wires of the strain sensor 10A overlap the wires of the strain sensor 10B in the direction R over center region B.

In the embodiment of FIG. 8C, the wires of the strain sensor 10A overlap the wires of the strain sensor 10B in the direction R over the substantial region A within the range of E, which extends in the thickness direction *X*.

As illustrated in FIG. 8C, the wires of the strain sensor 10A do not overlap the wires of the strain sensor 10B in the direction R over the substantial region A within the ranges of C, which extend in the thickness direction *X*. Instead, it is over regions F that the wires of the strain sensor 10A overlap the wires of the strain sensor 10B in the direction R within the ranges of C, which extend in the thickness direction *X*.
- 100: Robot
- X1 to X6: Rotation axis
- 1: Torque sensor
- 10A, 10B: Strain sensor
- 2: Strain generating body
- 21: Inner flange
- 22: Outer flange
- 22: Spoke
- 230,231: Surface
- 240: Hole
- C: Circumferential direction
- *R*: Radial direction
- *X*: Thickness direction

## Claims

1. A robot (100), **characterized by**:
a rotation axis (X1 to X6);
a torque sensor (1) disposed on the rotation axis (X1 to X6), the torque sensor (1) comprising:
a strain generating body (2); and
a strain sensor (10A, 10B) mounted on a portion of the strain generating body (2),
wherein the strain generating body (2) comprises
an inner flange (21);
a ring-shaped outer flange (22) disposed further outward than the inner flange (21) in a radial direction of the inner flange (21); and
a plurality of spokes (23A to 23F) disposed between the inner flange (21) and the outer flange (22) and connecting the inner flange (21) and the outer flange (22) to each other, at least one spoke (23A to 23F) of the plurality of spokes (23A to 23F) comprising a separate spoke (23A, 23B) which is un-integral to the inner flange (21) and the outer flange (22) and on which the strain sensor (10A, 10B) is mounted.

2. The robot (100) according to claim 1, wherein each of the plurality of spokes (23A to 23F) other than the separate spoke (23A, 23B) comprises an integral spoke (23C to 23F) which is integral to the inner flange (21) and the outer flange (22) and on which the strain sensor (10A, 10B) is not mounted.

3. The robot (100) according to claim 1 or 2,
wherein the strain sensor (10A, 10B) comprises
a first strain sensor (10A, 10B) mounted on a first surface (230, 231) of the separate spoke (23A, 23B), and
a second strain sensor (10A, 10B) mounted on a second surface (230, 231) of the separate spoke (23A, 23B), the second surface (230, 231) being approximately parallel to the first surface (230, 231), and
wherein an outer dimension of the separate spoke (23A, 23B) in a circumferential direction of the outer flange (22) is longest between the first surface (230, 231) and the second surface (230, 231).

4. The robot (100) according to claim 3, wherein the separate spoke (23A, 23B) comprises a hole (240) disposed between the first surface (230, 231) and the second surface (230, 231).

5. The robot (100) according to claim 4, wherein a portion of the separate spoke (23A, 23B) disposed between the strain sensor (10A, 10B) and the hole (240) comprises a thickness in the circumferential direction, the thickness being approximately identical to a thickness of the integral spoke (23C to 23F) in the circumferential direction.

6. The robot (100) according to claim 5, wherein the hole (240) comprises a hole dimension (L1) in the circumferential direction, the hole dimension (L1) comprising:
a first dimension being closer to the inner flange (21) than the strain sensor (10A, 10B) is to the inner flange (21);
a second dimension being closer to the outer flange (22) than the strain sensor (10A, 10B) is to the outer flange (22) and being greater than the first dimension, and
a third dimension being closer to the outer flange (22) than the second dimension is to the outer flange (22) and being less than the second dimension.

7. The robot (100) according to any one of claims 3 to 6,
wherein the first strain sensor (10A, 10B) comprises two first strain sensors (10A, 10B) mounted on the first surface (230, 231), and
wherein the second strain sensor (10A, 10B) comprises two second strain sensors (10A, 10B) mounted on the second surface (230, 231).

8. The robot (100) according to claim 7,
wherein the two first strain sensors (10A, 10B) overlap each other at least partially in a direction in which the two first strain sensors (10A, 10B) detect a strain, and
wherein the two second strain sensors (10A, 10B) overlap each other at least partially in a direction in which the two second strain sensors (10A, 10B) detect the strain.

9. A torque sensor (1), **characterized by**:
a strain generating body (2); and
a strain sensor (10A, 10B) mounted on a portion of the strain generating body (2),
wherein the strain generating body (2) comprises
an inner flange (21);
a ring-shaped outer flange (22) disposed further outward than the inner flange (21) in a radial direction of the inner flange (21); and
a plurality of spokes (23A to 23F) disposed between the inner flange (21) and the outer flange (22) and connecting the inner flange (21) and the outer flange (22) to each other, at least one spoke (23A to 23F) of the plurality of spokes (23A to 23F) comprising a separate spoke (23A, 23B) which is un-integral to the inner flange (21) and the outer flange (22) and on which the strain sensor (10A, 10B) is mounted.

10. A torque sensor (1), **characterized by**:
a strain generating body (2); and
a strain sensor (10A, 10B) mounted on a portion of the strain generating body (2),
wherein the strain generating body (2) comprises
an inner flange (21);
a ring-shaped outer flange (22) disposed further outward than the inner flange (21) in a radial direction of the inner flange (21); and
a plurality of spokes (23A to 23F) disposed between the inner flange (21) and the outer flange (22) and connecting the inner flange (21) and the outer flange (22) to each other, at least one spoke (23A to 23F) of the plurality of spokes (23A to 23F) comprising:
two first strain sensors (10A, 10B) mounted on a first surface (230, 231) of the at least one spoke (23A to 23F), the two first strain sensors (10A, 10B) overlapping each other at least partially in a direction in which the two first strain sensors (10A, 10B) detect a strain; and
two second strain sensors (10A, 10B) mounted on a second surface (230, 231) of the at least one spoke (23A to 23F), the two second strain sensors (10A, 10B) overlapping each other at least partially in a direction in which the two second strain sensors (10A, 10B) detect the strain.
